# EUROPÄISCHE PATENTSCHRIFT

(11) **EP 1 859 550 B1**
(45) Veröffentlichungstag und Bekanntmachung des Hinweises auf die Patenterteilung: **07.10.2009**
(21) Anmeldenummer: 06708337.8
(22) Anmeldetag: 17.02.2006
(51) Int. Cl.: H04B 10/18, H04B 10/155

(54) **VERFAHREN UND ANORDNUNG ZUR SENDESEITIGEN FORMUNG EINES ÜBERTRAGUNGSSIGNALS**
METHOD AND DEVICE FOR FORMING A TRANSMITTER-SIDE TRANSMISSION SIGNAL
PROCEDE ET DISPOSITIF POUR CONCEVOIR COTE ENVOI UN SIGNAL DE TRANSMISSION

(30) Priorität: 07.03.2005 DE 102005010864
(43) Veröffentlichungstag der Anmeldung: 28.11.2007
(73) Patentinhaber: Nokia Siemens Networks GmbH & Co. KG, 81541 München (DE)
(72) Erfinder: GOTTWALD, Erich, 83607 Holzkirchen (DE)
(86) Internationale Anmeldenummer: PCT/EP2006/060046
(87) Internationale Veröffentlichungsnummer: WO 2006/094891

(56) Entgegenhaltungen:
- US-A1- 2004 067 064
- US-A1- 2004 197 103

## Beschreibung

Die Erfindung betrifft Verfahren nach dem Oberbegriff des Patentanspruchs 1 und nach dem Oberbegriff des Patentanspruchs 7 und eine Anordnung nach dem Oberbegriff des Patentanspruchs 8.

Für die Informationsübertragung im Weitverkehr werden heute überwiegend hochbitratige digitale optische Übertragungssysteme mit Standard Glasfasern eingesetzt. Dabei begrenzen lineare und nichtlineare Effekte in der Übertragungsfaser und in den Systemkomponenten die Reichweite der Signalübertragung. Insbesondere die chromatische Dispersion der Glasfasern, auch als Gruppengeschwindigkeitsdispersion (engl. "group velocity dispersion", abgekürzt GVD) führen mit wachsender Datenrate zu Signalverzerrungen und demzufolge zu verminderten Übertragungsreichweiten, wenn keine Maßnahmen zur Dispersionskompensation getroffen werden. Auch nichtlineare Effekte, wie beispielsweise die Selbstphasenmodulation (engl. "self-phase modulation", abgekürzt SPM) verursachen Signalverzerrungen.

Eine Möglichkeit, solche aufgrund der linearen und nichtlinearen Effekte verursachten Störungen zu kompensieren, besteht darin, auf der Sendeseite der Übertragungsstrecke ein vorverzerrtes Signal zu generieren, sodass nach Propagation des Signals empfangsseitig die Störungen der Strecke aufgehoben sind und die gewünschte Signalform vorliegt. Diese Technik wurde erstmals von Koch et al. in der Veröffentlichung "Dispersion compensation by active predistorted signal synthesis", Journal of Lightwave Technology, Vol. LT-3, No. 4, Aug. 1985 vorgeschlagen. In der Patentschrift EP 0 654 193 von 1993 wird ebenfalls eine auf elektrischer Vorbehandlung des Datensignals basierte Vorverzerrungsmaßnahme genannt, bei der sowohl die optische Amplitude bzw. Leistung als auch die Phase bzw. die Frequenz der Lichtwelle sendeseitig so moduliert werden, dass am Ende der dispersiven Übertragungsstrecke ein praktisch unverzerrtes optisches Datensignal vorliegt.

In der Patentveröffentlichung WO2004/032385 A1 (im Folgenden als Dokument D1 bezeichnet) und der US Patentanmeldung der Veröffentlichungsnummer 2004/0067064 A1 werden Anordnungen zur elektrischen Vorkompensation von dispersionsbedingten Verzerrungen auf einer optischen Übertragungsstrecke vorgeschlagen. Die Anordnungen enthalten einen Prozessor-Bauteil zur Vorkompensation 10, in dem ein digitales Filter 18, ein Digital-Analog-Wandler 22 und gegebenenfalls andere Filteranordnungen in Serie geschaltet sind. In D1 ist das digitale Filter aus einem Serial to Parallel Converter (SPC) und einer Random Access Memory Look-up Table (RAM LUT) realisiert. Mit dem digitalen Filter werden die eindeutig unterscheidbaren Bitsequenzen eines Datensignals nach einer vorgegebenen Vorschrift in ein vorverzerrtes Signal zur Kompensation umgewandelt. Dieses Kompensationssignal wird anschließend einem Modulator zugeführt. Bei dispersionsbedingter Verzerrung eines Übertragungssignals wird jedes Bit durch seine benachbarten Bits beeinflusst. Die Anzahl der zu berücksichtigenden Nachbarbits beträgt bei 10 Gb/s und Standard Einmodenfaser im 1.5 µm Wellenlängenbereich unter 20 (oder ± 10). Das Datensignal wird in einen N-stufigen SPC wie beispielsweise ein Schieberegister eingespeist. Das Bitmuster, das dann an den N Abgriffen anliegt, wird als Adresse für den schnellen Speicher RAM-LUT der Kapazität 2^{N} verwendet. Jede Adresse führt zu einem Speicherplatz, in dem ein zugehöriger, aus der Übertragungsfunktion der Faserstrecke berechneter Wert abgelegt ist. Im (ein- oder mehrfachen) Datentakt wird dann der zur jeweiligen Adresse gehörige Wert über einen schnellen D/A Wandler und einen Verstärker zur Ansteuerung des E/O Wandlers verwendet.
Ein Nachteil dieser Realisierung ist, dass derzeit noch keine RAMs existieren, die mit der Datenrate von mindestens 10 Gbit/s, vorzugsweise von größer 20 bis 40 GBit/s ausgelesen werden können. Ferner müssen alle möglichen vom Bitmuster abhängigen Datenwerte gespeichert werden, dies entspricht 2^{N} Kombinationen.

Aufgabe der Erfindung ist es, ein Verfahren anzugeben, das eine technische Realisierung zur Erzeugung von beliebigen Vorverzerrungen auch bei hohen Datenraten ermöglicht. Außerdem soll eine hierzu geeignete Anordnung angegeben werden.

Diese Aufgaben werden durch Verfahren gemäß der Ansprüche 1 und 7 und durch eine Anordnung gemäß Anspruch 8 gelöst.

Erfindungsgemäß wird das aus einem Schieberegister parallel entnommene aktuelle Bitmuster mehreren Komparatoren zugeführt in denen ein Vergleich mit vorgegebenen Vergleichswerten stattfindet. Die Vergleichswerte sind in Abhängigkeit von einer Kompensationsfunktion in einem Vergleichswert-Register generiert worden und damit einstellbar. Sie hängen vom jeweiligen Aufbau einer Übertragungsstrecke ab und berücksichtigen somit den Einfluss der Störeffekte. In den Komparatoren wird das aktuelle Bitmuster in eine Bitkombination umkodiert, die dem digitalen Wert des Kompensationssignals entspricht. Der Vorteil des erfindungsgemäßen Verfahrens besteht darin, dass Komparatoren sehr schnell sind und Datenraten von mehr als 40 Gbit/s handhaben können. Dagegen sind die Vergleichswerte im Vergleichswertregister quasistatisch. Bei Einbindung in eine Regelung ist eine Aktualisierung mit Taktraten unter 1 MHz im Allgemeinen voll ausreichend, wodurch die Anforderungen an die Speichergeschwindigkeit sehr gering sind. Zusätzlich ist die Diskretisierung bzw. die Stufenzahl des D/A-Wandlers unabhängig von der Länge des aktuellen Bitmusters, d.h. das System ist beliebig anpassbar. Allerdings ist eine Diskretisierung von mehr als 2⁴ Stufen nicht mehr sinnvoll, da Verstärker und Modulator nur begrenzt linear arbeiten. Insgesamt birgt das Verfahren der elektrischen Vorverzerrung mit der erfindungsgemäßen Realisierungsvariante einen großen kommerziellen Vorteil, da durch Einsparung der dispersionskompensierenden Fasern (DCFs) innerhalb der Übertragungsstrecke große Kosten gespart werden. Insbesondere würde der Wegfall der DCFs eine Vereinfachung der optischen Verstärkeranordnungen mit sich bringen. Da die DCFs in der Regel zwischen der zweiten und dritten Verstärkerstufe eingefügt sind, würden durch den Wegfall von DCFs, womit eventuell auch der Wegfall einer Verstärkerstufe verbunden wäre, Verbesserungen in Bezug auf die Dämpfung, die dynamischen Eigenschaften und Rauscheigenschaften der Verstärker erreicht werden.

In einer vorteilhaften Ausführungsvariante wird das aus dem Schieberegister parallel entnommene Bitmuster zwei oder mehr Komparatorsätzen zugeführt, die jeweils aus mehreren Komparatoren bestehen. Wird zwischen diesen Komparatorsätzen mit mindestens doppelter Bittaktrate umgeschaltet, werden pro Bittaktintervall mindestens zwei zeitlich aufeinander folgende Bitkombinationen respektive Kompensationssignale erzeugt. Die Auflösung des Verfahrens wird auf diese Weise erhöht. Während eine Abtastrate von einem Bit pro Bittakt empfangsseitig eine eye-opening penalty (EOP) von etwa 3 dB mit sich bringt, verringert sich die EOP bei vier Abtastpunkten pro Bitintervall bis auf etwa 0,4 dB, was bedeutet, dass die Übertragungsqualität deutlich besser wird. Bei mehr als vier Abtastpunkten dagegen treten keine wesentlichen Verbesserungen der Übertragungsqualität mehr ein.

In einer weiteren Ausführungsvariante wird vorteilhaft die in einem ersten Komparatorsatz erzeugte umcodierte Bitkombination im Modulator zur Steuerung der Amplitude des Übertragungssignals und die in einem zweiten Komparatorsatz erzeugte umcodierte Bitkombination im Modulator zur Steuerung der Phase des Übertragungssignals eingesetzt. Wird nur ein Kompensationssignal für die Amplitude erzeugt, so tritt zwar eine Verbesserung der Übertragungsqualität ein, zur vollständigen Entzerrung jedoch ist eine Phaseninvertierung durch ein vorverzerrtes Phasensignal unumgänglich.

In einer weiteren vorteilhaften Ausführungsvariante werden statt eines Schieberegisters elektronische Laufzeitelemente verwendet. Diese werden seriell in den Datenstrom integriert und in den Zwischenräumen werden die Bits parallel abgegriffen. Werden elektronische Laufzeitelemente mit stufenlos einstellbarer Laufzeit eingesetzt, wird eine stufenlose Anpassung an beliebige Datenraten oder Taktraten erzielt. Durch den Einsatz verschiedener fehlerkorrigierender Codierungen liegen beispielsweise für eine Datenrate von ca. 10 Gbit/s die typischen Taktraten zwischen 9,956 und 12,6 GHz.

Weitere vorteilhafte Ausgestaltungsvarianten der Erfindung sind in den Unteransprüchen angegeben.

Im Folgenden wird die Erfindung anhand eines Ausführungsbeispiels näher erläutert. Dabei zeigen
- Fig. 1: eine Schaltungsanordnung des erfindungsgemäßen Umcodierers zur elektrischen Vorverzerrung
- Fig. 2: eine Schaltungsanordnung nach Fig. 1 mit Detailansicht der Komparatorschaltkreise
- Fig. 3: eine Schaltungsanordnung nach Fig. 1 mit zwei Ausgabewerten des Kompensationssignals pro Bittaktrate
- Fig. 4: eine Schaltungsanordnung eines allgemeinen Umcodierers mit zwei Ausgängen zur Ansteuerung von Amplitude und Phase eines Übertragungssignals

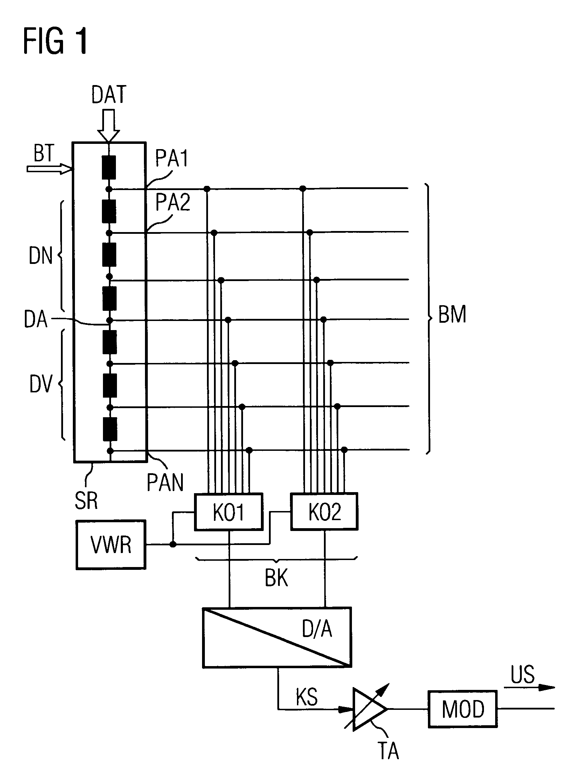

In Fig. 1 ist eine Schaltungsanordnung des erfindungsgemäßen Umcodierers zur elektrischen Vorverzerrung gezeigt. Sie ist sendeseitig angeordnet. Die digitalen Daten DAT werden seriell einem vorzugsweise getakteten Schieberegister SR zugeführt. Die Daten werden bitweise mit dem Takt BT durch das Schieberegister geschoben. An den Parallelausgängen PA1 bis PAN werden die einzelnen Bits pro Bittakt parallel abgegriffen. Das derart parallel entnommene Bitmuster BM besteht aus einem auszusendenden Bit DA und den angrenzenden Bits DV und DN. Die Anzahl der Bits hängt von den Störeinflüssen des Übertragungssystems ab, da beispielsweise abhängig vom Wert der Dispersion mehr oder weniger Nachbarbits des auszusendenden Datenbits betroffen sind. Die Anzahl der maximal betroffenen Nachbarbits hängt von der maximal zu kompensierenden Dispersion ab. Das Bitmuster BM, das beispielsweise N Bits umfasst, wird anschließend den Komparatoren (KO1, KO2 ...) zugeführt. Die Komparatoren (KO1, KO2 ...) sind zusätzlich jeweils mit einem Vergleichswertregister VWR verbunden. Dort sind die Vergleichswerte (VW1, VW2 ...) einer übertragungsspezifischen Referenzmenge abgelegt. Die Vergleichswerte berechnen sich jeweils aus vorgegebenen möglichen Bitmustern und der inversen Übertragungsfunktion (H(ω)⁻¹ = T⁻¹). Die Vergleichswerte enthalten damit die gesamte Information über die Übertragungsstrecke und die durch die Übertragung verursachten Störungen. Sie können wahlweise auch in einer Tabelle hinterlegt sein, sollen aber beliebig austauschbar sein, um eine Anpassung an jede beliebige Übertragungsstrecke zu gewährleisten. Die Vergleichswerte werden jeweils einem gesonderten Eingang der Komparatoren zugeführt. Die Komparatoren liefern an ihrem Ausgang eine logische 1, wenn eine der dort gespeicherten Vergleichswerte mit dem anliegenden Bitmuster übereinstimmt. Ansonsten liefern sie einen Nullwert. Die Ausgänge der Komparatoren sind mit den Eingängen eines Digital-Analog-Wandlers D/A verbunden. Die sich aus den Komparatoren ergebende Bitmusterkombination BK wird im Digital-Analog-Wandler D/A in ein Analog-Signal, dem eigentlichen Kompensationssignal KS umgesetzt und das Kompensationssignal KS wird gegebenenfalls nach Verstärkung in einem Verstärker TA dem Modulator MOD zugeführt.

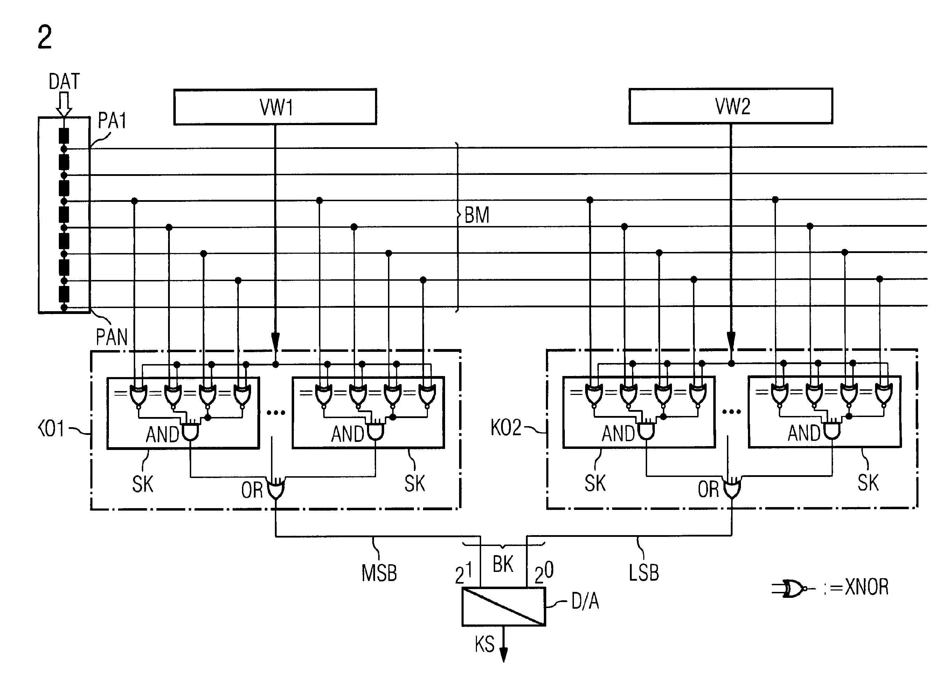

Anhand von Fig. 2 wird ein konkretes Beispiel des erfindungsgemäßen Verfahrens gegeben.
Zur Auslegung des Vorverzerrers wird zunächst die inverse Übertragungsfunktion T⁻¹ der Faser bzw. des Systems, gegebenenfalls inklusive der inversen Übertragungsfunktion des Modulators und diverser Verstärker berechnet. Anschließend wird für eine zufällige Bitfolge ausreichender Länge das Ausgangssignal am Empfänger für einen maximalen Dispersionswert simuliert. Der derart erhaltene Verlauf der Amplitude und der Phase des verzerrten Ausgangssignals werden je nach Grad der Verzerrung diskretisiert. Beträgt die Diskretisierung beispielsweise 4 (= 2²) Stufen, so werden K = 2 Komparatoren benötigt. (Im Falle von 8 (= 2³) Stufen wären es K = 3 Komparatoren usw.)

In dem hier behandelten Anwendungsbeispiel soll ein Bitmuster der Länge N = 4 in ein vierstufiges Kompensationssignal (mit den Werten 0,1,2 und 3) umgewandelt werden. Die binären Bitmuster werden nach folgender Zuordnungstabelle in den daneben angeführten Analog-Wert umcodiert:

| | | |
|---|---|---|
| 0000 | → | 0 |
| 0001 | → | 1 |
| 0010 | → | 3 |
| 0011 | → | 2 |
| 0100 | → | 0 |
| 0101 | → | 0 |
| 0110 | → | 1 |
| 0111 | → | 1 |
| 1000 | → | 2 |
| 1001 | → | 2 |
| 1010 | → | 3 |
| 1011 | → | 3 |
| 1100 | → | 3 |
| 1101 | → | 0 |
| 1110 | → | 1 |
| 1111 | → | 2 |

Ein den Parallelausgängen PA1 bis PAN entnommenes Bitmuster wird bitweise den Eingängen der Komparatoren zugeführt. Die einzelnen Komparatoreingänge sind mit einem ersten Eingang einzelner XNOR-Gatter verbunden. In der in Fig. 2 als Beispiel angegebenen Schaltungsanordnung sind jeweils 4 Komparatoreingänge mit jeweils einem XNOR-Gatter verbunden. Der zweite Eingang jedes XNOR-Gatters ist mit dem Vergleichswert-register VWR verbunden. Die Ausgänge von jeweils vier XNOR-Gattern sind mit den Eingängen eines UND-Gatters verbunden. Die in diesem Beispiel aus vier XNOR-Gattern und einem UND-Gatter aufgebauten Schaltkreise SK führen pro Takt jeweils einen Vergleich zwischen dem zugeführten Bitmuster BM und einem Vergleichswert VW aus. Die Anzahl der Schaltkreise SK pro Komparator hängt von der Anzahl der Vergleichswerte in den zugehörigen Vergleichswertregistern ab. Die Vergleichswerte VW werden mit Hilfe der inversen Übertragungsfunktion T⁻¹ und den 2^{N} möglichen Bitmustern ermittelt und in Referenzmengen zusammengefasst. In dem angegebenen Beispiel seien folgende Referenzmengen in den Vergleichswertregistern abgelegt:
In VW1 ist die Referenzmenge {0001;0110;0111;1110;0010;1010;1011;1100} abgelegt. In VW2 sind folgende Vergleichswerte angegeben:
{0011;1000;1001;1111;0010;1010;1011;1100}. Demnach existieren in jedem Komparator 8 Schaltkreise SK, in denen jeweils ein Vergleich durchgeführt wird. Die Ausgänge jedes einzelnen Schaltkreises SK sind mit den Eingängen eines ODER-Gatters verbunden. Stimmt eines der an den Eingängen der Komparatoren anliegenden Bitmuster mit einem Vergleichswert überein, so liefert einer der Schaltkreise SK eine logische Eins, die aufgrund der nachfolgenden ODER-Verknüpfung auch am Ausgang des Komparators anliegt. Der Ausgang von Komparator KO1 ist in diesem Beispiel das most significant bit (MSB), der Ausgang von Komparator KO2 ist das least significant bit (LSB). Als Beispiel soll das Bitmuster 1010 parallel dem Schieberegister entnommen werden. Das Bitmuster ist Element beider Referenzmengen der Vergleichswertregister. Demnach liegen an den Ausgängen beider Komparatoren logische Einsen an, die dem Digital-Analog-Wandler D/A zugeführt werden. Dieser wandelt die erhaltene Bitkombination (in diesem Falle 11) in den zugehörigen Analog-Wert (hier 3) um. Auf diese Weise wird jede Zuordnung aus der oben angegebenen Zuordnungstabelle erreicht.
Durch die Umcodierung eines Bitmusters BM der Länge N in eine Bitkombination BK der Länge M mittels der erfindungsgemäßen Komparatorschaltung fallen im Gegensatz zu dem in D1 verwendeten RAM-LUT nicht mehr 2^{N} Speicherplätze in dem Vergleichswertregister an. Statt der zu einem bestimmten Bitmuster oder wie in D1 Adresse gehörigen Funktionswerte der Kompensationsfunktion, werden hier nur diejenigen Vergleichswerte gespeichert, die zu einem vordefinierten Wert der Kompensationsfunktion führen. Die Anzahl der erhaltenen Bitkombinationen beträgt 2^{M} und ist stets gegenüber der ursprünglichen 2^{N} Möglichkeiten reduziert. Der Speicherort der Vergleichswerte ist nicht ein RAM, sondern das jeweilige Vergleichswertregister eines Komparators. Würde beispielsweise ein Bitmuster mit N = 20 Bits an den Parallelausgängen des Schieberegisters anliegen, müsste in D1 ein RAM mit 2²⁰ Speicherplätzen zur Verfügung stehen, das mit einer hohen Bitrate von derzeit > 40 GBit ausgelesen werden soll. Durch das erfindungsgemäße Verfahren würden bei einer Diskretisierung von 8 Stufen nur 3 Komparatoren anfallen. Zusätzlich entfällt das Problem einer hohen Auslesegeschwindigkeit.

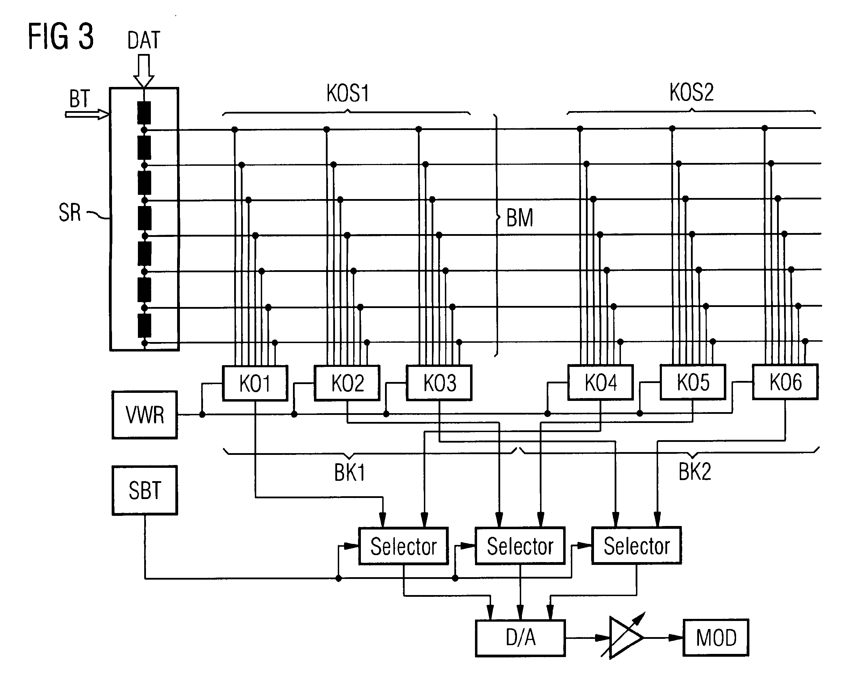

In Fig. 3 ist eine Schaltungsanordnung eines elektrischen Vorverzerrers skizziert, der pro Taktintervall mindestens zwei Ausgabewerte für das Kompensationssignal KS liefert. Dazu werden mehrere Komparatoren zu einem Komparatorsatz KOS zusammengefasst und mehrere dieser Komparatorsätze hintereinander geschaltet. In der in Fig. 3 angegebenen Ausführungsvariante werden zwei Komparatorsätze KOS1 und KOS2 verwendet, um pro Bittaktintervall BT zwei Ausgabewerte für das Kompensationssignal KS zu erzeugen. Eine Steuerung SBT schaltet dazu mit doppelter Bittaktrate zwischen den beiden Komparatorsätzen hin und her. Dazu sind zwischen den Komparatoren und dem D/A-Wandler Selectoren eingefügt. Diese Ausführungsvariante oder Varianten mit mehr als 2 Ausgabewerten pro Takt sind besonders für Übertragungsstrecken sinnvoll, bei denen sich aufgrund von Nichtlinearitäten höhere Frequenzkomponenten einstellen, wodurch im Übertragungssignal steile Signalflanken und deutliche Pegelvariationen während einer Bitdauer auftreten. In diesem Fall bringt eine Erhöhung der Auflösung auf zwei oder mehr Abtastwerte pro Bittakt eine deutliche Verbesserung der Kompensation der Störeffekte mit sich.

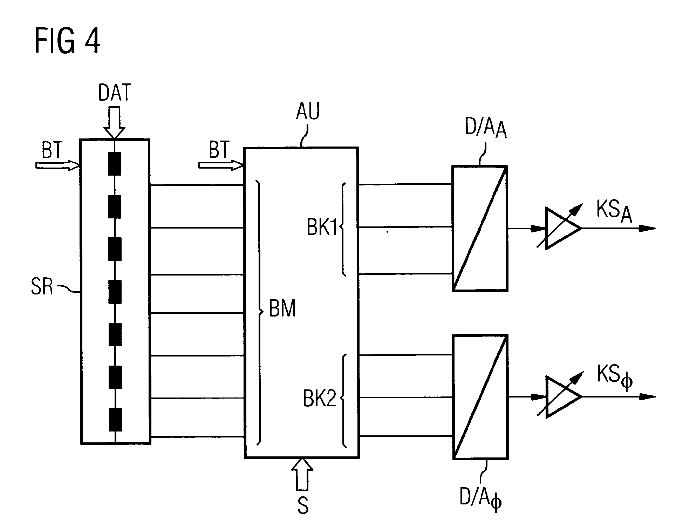

In Fig. 4 ist eine Schaltungsanordnung für einen allgemeinen elektrischen Vorverzerrer angegeben, der sowohl Kompensationssignale KS_{A} zur Steuerung der Amplitude des Übertragungssignals US im Modulator MOD, als auch Kompensationssignale KS_{φ} zur Steuerung der Phase des Übertragungssignals US im Modulator MOD erzeugt. Die Komparatoren sind hier allgemein durch eine Umcodierer-Schaltung ersetzt, die beispielsweise programmierbar ist. Ausgehend von einem bittaktweise durch das Schieberegister SR durchgeschobenen Datensignal DAT wird durch entsprechende Umcodierung des an den Parallelausgängen des Schieberegisters anliegenden Bitmusteres BM der Länge N neue Bitkombinationen BK der Länge M erzeugt, die nach der D/A-Wandlung die analogen Steuersignale KS_{A} und KS_{φ} für den Modulator ergeben. Die fallspezifische Programmierung des Umcodierers resultiert aus den Daten und Eigenschaften der Übertragungsstrecke und ihrer Komponenten zwischen dem D/A-Wandler und dem Empfänger am Ende der Strecke. In einer weiteren Ausführungsvariante ist eine Anzahl von vorab berechneten Daten, die bestimmten Dispersionswerten zugeordnet sind, mit dem allgemeinen Umcodierer AU verbunden.

Dasselbe Prinzip lässt sich auch auf elektrische Signale übertragen, wenn die Signale sowohl im Basisband als auch in modulierter Form übertragen werden.

## Patentansprüche

1. Verfahren zur sendeseitigen Formung eines Übertragungssignals (US) zur Kompensation der durch Übertragungseigenschaften eines optischen Übertragungssystems verursachten Störungen,
bei dem ein auszusendendes Datenbit (DA) und angrenzende Bits (DV, DN) mit einer Bittaktrate (BT) aus einem N-stufigen Schieberegister (SR) als Bitmuster (BM) entnommen und in eine Bitkombination (BK) umcodiert werden, die durch Digital/Analog-Wandlung in einen Wert eines Kompensationssignals (KS) gewandelt wird, das einen Modulator (MOD) entsprechend der gewünschten Formung des Übertragungssignals (US) steuert,
**dadurch gekennzeichnet,**
**dass** das aus dem Schieberegister (SR) parallel entnommene aktuelle Bitmuster (BM) mehreren Komparatoren (KO1, KO2,...) zugeführt wird,
**dass** den Komparatoren (KO1, KO2,...) in Abhängigkeit von einer Kompensationsfunktion generierte einstellbare Vergleichswerte (VW1, VW2, ...) zugeführt werden und
**dass** die Komparatoren (KO1, KO2,...) entsprechend diesen Vergleichswerten (VW1, VW2,...) das aktuelle Bitmuster (BM) in die Bitkombination (BK) umcodieren, die dem digitalen Wert des Kompensationssignals (KS) entspricht.

2. Verfahren nach Anspruch 1,
**dadurch gekennzeichnet,**
**dass** das aus dem Schieberegister (SR) parallel entnommene Bitmuster (BM) mindestens zwei Komparatorsätzen (KOS1, KOS2, ...) bestehend aus jeweils mehreren Komparatoren (KO1, KO2, ...) zugeführt wird, und dass zwischen diesen Komparatorsätzen (KOS1, KOS2...) mit mindestens doppelter Bittaktrate (BT) umgeschaltet wird, sodass pro Bittaktintervall mindestens zwei zeitlich aufeinander folgende umcodierte Bitkombinationen (BK1, BK2...) erzeugt werden.

3. Verfahren nach Anspruch 1,
**dadurch gekennzeichnet,**
**dass** die in einem ersten Komparatorsatz (KOS1) erzeugte umcodierte Bitkombination (BK1) im Modulator (MOD) zur Steuerung der Amplitude des Übertragungssignals (US) und dass die in einem zweiten Komparatorsatz (KOS2) erzeugte umcodierte Bitkombination (BK2) im Modulator (MOD) zur Steuerung der Trägerphase des Übertragungssignals (US) eingesetzt wird.

4. Verfahren nach Anspruch 1,
**dadurch gekennzeichnet,**
**dass** die Vergleichswerte (VW1, VW2,...) der Komparatoren (KO1, KO2,...) aus der inversen Übertragungsfunktion (H(ω)⁻¹) des Übertragungssystems und den möglichen Bitmustern (BM) ermittelt werden.

5. Verfahren nach Anspruch 1,
**dadurch gekennzeichnet,**
**dass** die Vergleichswerte (VW1, VW2,...) der Komparatoren (KO1, KO2,...) in Tabellen hinterlegt sind und entsprechend der Kompensationsfunktion den Komparatoren (KO1, KO2,...) zugeführt werden.

6. Verfahren nach Anspruch 1,
**dadurch gekennzeichnet,**
**dass** das aus dem Schieberegister (SR) parallel entnommene Bitmuster (BM) bestehend aus N Bits stets auf eine Bitkombination (BK) bestehend aus M Bits mit 1 < M < N umcodiert wird.

7. Verfahren zur sendeseitigen Formung eines Übertragungssignals (US) zur Kompensation der durch Übertragungseigenschaften eines optischen Übertragungssystems verursachten Störungen,
**dadurch gekennzeichnet,**
**dass** ein auszusendendes Datenbit (DA) und angrenzende Bits (DV, DN) mit einer Bittaktrate (BT) aus einer Anordnung mit N elektronischen und in ihrer Laufzeit einstellbaren Laufzeitelementen (SR) als Bitmuster (BM) entnommen werden,
**dass** dieses parallel entnommene Bitmuster (BM) mehreren Komparatoren (KO1, KO2,...) zugeführt wird,
**dass** den Komparatoren (KO1, KO2,...) in Abhängigkeit von einer Kompensationsfunktion generierte einstellbare Vergleichswerte (VW1, VW2,...) zugeführt werden,
**dass** die Komparatoren (KO1, KO2,...) entsprechend diesen Vergleichswerten (VW1, VW2,...) das Bitmuster (BM) in eine Bitkombination (BK) umcodieren, die durch Digital/Analog-Wandlung in einen Wert eines Kompensationssignals (KS) gewandelt wird, und dass das Kompensationssignal (KS) einen Modulator (MOD) entsprechend der gewünschten Formung des Übertragungssignals (US) steuert.

8. Anordnung zur sendeseitigen Formung eines Übertragungssignals (US) zur Kompensation der durch Übertragungseigenschaften eines optischen Übertragungssystems verursachten Störungen, bei dem ein auszusendendes Datenbit (DA) und angrenzende Bits (DV, DN) mit einer Bittaktrate (BT) aus einem N-stufigen Schieberegister (SR) als Bitmuster (BM) entnommen und in eine Bitkombination (BK) umcodiert werden, die durch Digital/Analog-Wandlung in einen Wert eines Kompensationssignals (KS) gewandelt wird, das einen Modulator (MOD) entsprechend der gewünschten Formung des Übertragungssignals (US) steuert, **dadurch gekennzeichnet,**
**dass** die Parallelausgänge (PA1, PA2, ...PAN) des Schieberegisters (SR) mit einer Anzahl von Komparatoren (KO1, KO2...) verbunden sind, die wiederum mit einer Anzahl von Vergleichswertregistern (VWR) verbunden sind, und in den Komparatoren Vergleiche des aktuellen Bitmusters (BM) mit vorgegebenen Vergleichswerten (VW1, VW2...) stattfinden, wodurch das aktuelle Bitmuster (BM) in die entsprechende Bitkombination (BK) umcodiert wird, und dass die Ausgänge der Komparatoren mit einem Digital-Analog-Wandler (D/A) verbunden sind, der die Bitkombination (BK) in das analoge Kompensationssignal (KS) zur Ansteuerung des Modulators (MOD) zur gewünschten Formung des Übertragungssignals (US) umwandelt.

## Claims

1. Method for forming a transmitter-side transmission signal (US) for compensating for the disturbances caused by transmission characteristics of an optical transmission system, in which a data bit (DA) to be sent out and adjoining bits (DV, DN) are taken as bit patterns (BM) from an N-stage shift register (SR) at a bit clock rate (BT) and are recoded into a bit combination (BK) which is converted by digital/analogue conversion into a value of a compensation signal (KS) which controls a modulator (MOD) in accordance with the desired forming of the transmission signal (US), **characterized in that** the current bit pattern (BM) taken in parallel from the shift register (SR) is supplied to a number of comparators (KO1, KO2, ...),
**in that** adjustable comparison values (VW1, VW2, ...) generated in dependence on a compensation function are supplied to the comparators (KO1, KO2, ...) and
**in that** the comparators (KO1, KO2, ...) recode the current bit pattern (BM) in accordance with these comparison values (VW1, VW2, ...) into the bit combination (BK) which corresponds to the digital value of the compensation signal (KS).

2. Method according to Claim 1, **characterized in that** the bit pattern (BM) taken in parallel from the shift register (SR) is supplied to at least two comparator sets (KOS1, KOS2, ...) consisting of in each case a number of comparators (KO1, KO2, ...) and **in that** switching with at least twice the bit clock rate (BT) is effected between these comparator sets (KOS1, KOS2, ...) so that at least two recoded bit combinations (BK1, BK2, ...) following one another in time are generated per bit clock interval.

3. Method according to Claim 1, **characterized in that** the recoded bit combination (BK1) generated in a first comparator set (KOS1) is used for controlling the amplitude of the transmission signal (US) in the modulator (MOD) and **in that** the recoded bit combination (BK2) generated in a second comparator set (KOS2) is used for controlling the carrier phase of the transmission signal (US) in the modulator (MOD).

4. Method according to Claim 1, **characterized in that** the comparison values (VW1, VW2, ...) of the comparators (KO1, KO2, ...) are determined from the inverse transfer function (H(ω)⁻¹) of the transmission system and the possible bit patterns (BM).

5. Method according to Claim 1, **characterized in that** the comparison values (VW1, VW2, ...) of the comparators (KO1, KO2, ...) are deposited in tables and are supplied to the comparators (KO1, KO2, ...) in accordance with the compensation function.

6. Method according to Claim 1, **characterized in that** the bit pattern (BM) taken in parallel from the shift register (SR), consisting of N bits, is always recoded to a bit combination (BK) consisting of M bits, with 1 < M < N.

7. Method for forming a transmitter-side transmission signal (US) for compensating for the disturbances caused by transmission characteristics of an optical transmission system, **characterized in that** a data bit (DA) to be sent out and adjoining bits (DV, DN) are taken as bit patterns (BM) at a bit clock rate (BT) from an arrangement with N electronic delay elements (SR), the delay time of which is adjustable,
**in that** this bit pattern (BM) taken in parallel is supplied to a number of comparators (KO1, KO2, ...),
**in that** adjustable comparison values (VW1, VW2, ...) generated in dependence on a compensation function are supplied to the comparators (KO1, KO2, ...),
**in that** the comparators (KO1, KO2, ...) recode the bit pattern (BM) in accordance with these comparison values (VW1, VW2, ...) into a bit combination (BK) which is converted into a value of a compensation signal (KS) by digital/analogue conversion, and
**in that** the compensation signal (KS) controls a modulator (MOD) in accordance with the desired forming of the transmission signal (US).

8. Device for forming a transmitter-side transmission signal (US) for compensating for the disturbances caused by transmission characteristics of an optical transmission system, in which a data bit (DA) to be sent out and adjoining bits (DV, DN) are taken as bit patterns (BM) from an N-stage shift register (SR) at a bit clock rate (BT) and are recoded into a bit combination (BK) which is converted by digital/analogue conversion into a value of a compensation signal (KS) which controls a modulator (MOD) in accordance with the desired forming of the transmission signal (US), **characterized in that** the parallel outputs (PA1, PA2, ... PAN) of the shift register (SR) are connected to a number of comparators (KO1, KO2, ...) which, in turn, are connected to a number of comparison-value registers (VWR), and in the comparators comparisons of the current bit pattern (BM) with predetermined comparison values (VW1, VW2, ...) take place, as a result of which the current bit pattern (BM) is recoded into the corresponding bit combination (BK) and **in that** the outputs of the comparators are connected to a digital/analogue converter (D/A) which converts the bit combination (BK) into the analogue compensation signal (KS) for driving the modulator (MOD) to the desired forming of the transmission signal (US).

## Revendications

1. Procédé pour former, côté émission, un signal de transmission (US) pour compenser les perturbations causées par des caractéristiques de transmission d'un système de transmission optique, dans lequel
- un bit de données (DA) à émettre et des bits adjacents (DV, DN) sont prélevés avec une cadence binaire (BT) hors d'un registre à décalage (SR) à N étages en tant que motif binaire (BM) et recodés en une combinaison de bits (BK) qui est convertie par conversion numérique analogique en une valeur d'un signal de compensation (KS) qui commande un modulateur (MOD) en fonction de la formation souhaitée du signal de transmission (US),
**caractérisé en ce que**
- le motif binaire actuel (BM) prélevé parallèlement hors du registre à décalage (SR) est envoyé sur plusieurs comparateurs (KO1, KO2, ...),
- des valeurs de comparaison (VW1, VW2, ...) réglables générées en fonction d'une fonction de compensation sont envoyées sur les comparateurs (KO1, KO2, ...) et
- les comparateurs (KO1, KO2, ...) recodent le motif binaire actuel (BM), conformément à ces valeurs de comparaison (VW1, VW2, ....), en la combinaison de bits (BK) qui correspond à la valeur numérique du signal de compensation (KS).

2. Procédé selon la revendication 1, **caractérisé en ce que** le motif binaire (BM) prélevé parallèlement hors du registre à décalage (SR) est envoyé sur au moins deux groupes de comparateurs (KOS1, KOS2, ...) composés chacun de plusieurs comparateurs (KO1, KO2, ...) et **en ce qu'**il y a commutation entre ces groupes de comparateurs (KOS1, KOS2, ...) avec au moins le double de la cadence binaire (BT) de sorte que sont créées, par intervalle de cadence binaire, au moins deux combinaisons binaires (BK1, BK2, ...) recodées qui se succèdent dans le temps.

3. Procédé selon la revendication 1, **caractérisé en ce que** la combinaison de bits (BK1) recodée créée dans un premier groupe de comparateurs (KOS1) est mise en oeuvre dans le modulateur (MOD) pour commander l'amplitude du signal de transmission (US) et **en ce que** la combinaison de bits (BK2) recodée créée dans un deuxième groupe de comparateurs est mise en oeuvre dans le modulateur (MOD) pour commander la phase porteuse du signal de transmission (US).

4. Procédé selon la revendication 1, **caractérisé en ce que** les valeurs de comparaison (VW1, VW2, ...) des comparateurs (KO1, KO2, ...) sont déterminées à partir de la fonction de transmission inverse (H(ω)⁻¹) du système de transmission et à partir des motifs binaires (BM) possibles.

5. Procédé selon la revendication 1, **caractérisé en ce que** les valeurs de comparaison (VW1, VW2, ...) des comparateurs (KO1, KO2, ...) sont déposées dans des tables et sont envoyées sur les comparateurs (KO1, KO2, ...) conformément à la fonction de compensation.

6. Procédé selon la revendication 1, **caractérisé en ce que** le motif binaire (BM) prélevé parallèlement hors du registre à décalage (SR), composé de N bits, est toujours recodé sur une combinaison de bits (BK) composée de M bits avec 1 < M < N.

7. Procédé pour former, côté émission, un signal de transmission (US) pour compenser les perturbations causées par des caractéristiques de transmission d'un système de transmission optique,
**caractérisé en ce que**
- un bit de données (DA) à émettre et des bits adjacents (DV, DN) sont prélevés avec une cadence binaire (BT) en tant que motif binaire (BM) hors d'un ensemble de N éléments à temps de propagation (SR) électroniques et à temps de propagation réglable,
- ce motif binaire (BM) prélevé parallèlement est envoyé sur plusieurs comparateurs (KO1, KO2, ...),
- des valeurs de comparaison réglables (VW1, VW2, ...) générées en fonction d'une fonction de compensation sont envoyées sur les comparateurs (KO1, KO2, ...),
- les comparateurs (KO1, KO2, ...) recodent le motif binaire (BM), conformément à ces valeurs de comparaison (VW1, VW2, ....), en une combinaison de bits (BK) qui est convertie par conversion numérique analogique en une valeur d'un signal de compensation (KS) et **en ce que** le signal de compensation (KS) commande un modulateur (MOD) en fonction de la formation souhaitée du signal de transmission (US).

8. Dispositif pour former, côté émission, un signal de transmission (US) pour compenser les perturbations causées par des caractéristiques de transmission d'un système de transmission optique, dans lequel un bit de données (DA) à émettre et des bits adjacents (DV, DN) sont prélevés avec une cadence binaire (BT) en tant que motif binaire (BM) hors d'un registre à décalage (SR) à N étages et recodés en une combinaison de bits (BK) qui est convertie par conversion numérique analogique en une valeur d'un signal de compensation (KS) qui commande un modulateur (MOD) en fonction de la formation souhaitée du signal de transmission (US),
**caractérisé en ce que**
les sorties parallèles (PA1, PA2, ... PAN) du registre à décalage (SR) sont reliées à un nombre de comparateurs (KO1, KO2) qui sont eux-mêmes reliés à un nombre de registres de valeurs de comparaison (VWR), et des comparaisons du motif binaire actuel (BM) avec des valeurs de comparaison prédéterminées (VW1, VW2, ...) ont lieu dans les comparateurs, du fait de quoi le motif binaire actuel (BM) est recodé en la combinaison de bits (BK) correspondante, et **en ce que** les sorties des comparateurs sont reliées à un convertisseur numérique analogique (D/A) qui convertit la combinaison de bits (BK) en le signal de compensation analogique (KS) pour commander le modulateur (MOD) en vue de la formation souhaitée du signal de transmission (US).
